# EUROPEAN PATENT APPLICATION

(11) **EP 4 488 103 A1**
(43) Date of publication of application: **08.01.2025**
(21) Application number: 23791679.6
(22) Date of filing: 05.04.2023
(51) Int. Cl.: B60L 15/20, B60L 3/00, B60L 9/18

(54) **ELECTRIC VEHICLE**

(30) Priority: 21.04.2022 JP 2022070194
(71) Applicant: KABUSHIKI KAISHA TOYOTA JIDOSHOKKI, Kariya-shi, Aichi 448-8671 (JP)
(72) Inventor: KITAMURA Keisuke, Kariya-shi, Aichi 448-8671 (JP)
(74) Representative: TBK
(86) International application number: PCT/JP2023/014123
(87) International publication number: WO 2023/204028

(57) **Abstract**

An electric vehicle includes a plurality of motors, a driving force merging unit configured to merge driving forces of the plurality of motors in a state where rotation speeds of output shafts of the plurality of motors are interlocked with each other, a rotation detection unit configured to detect a rotation speed of a target motor that is any one of the plurality of motors, a main control unit configured to generate a rotation speed command signal based on a target rotation speed, and a plurality of command units provided to correspond to the plurality of motors, and configured to transmit motor command signals to the corresponding motors. The main control unit is configured to transmit the rotation speed command signal to a first command unit that is the command unit corresponding to the target motor, and not to transmit the rotation speed command signal to a second command unit that is the command unit corresponding to the motor other than the target motor, and the second command unit is configured to generate a second motor command signal to be transmitted to the motor corresponding to the second command unit based on a processing result of the rotation speed command signal received by the first command unit.

## Description

### Technical Field

The present disclosure relates to an electric vehicle.

### Background Art

In related art, for example, a vehicle described in Patent Literature 1 has been known as a technique related to an electric vehicle. The vehicle of Patent Literature 1 is a battery-driven vehicle including a DC/AC conversion circuit that converts an output voltage of a battery into an AC voltage, two AC motors which are connected in parallel to the battery and to which a voltage is supplied from the DC/AC conversion circuit, and a driving force transmission member that engages with output shafts of the two AC motors and transmits driving forces obtained from the two AC motors to wheels. The DC/AC conversion circuit is provided to correspond to each of the two AC motors. A detection unit that detects a rotation speed of the AC motor is provided in at least one of the AC motors.

### Citation List

### Patent Literature

Patent Literature 1: Japanese Unexamined Patent Publication No. 2001-327004

### Summary of Invention

### Technical Problem

In the above-described technique of the related art, a control unit generates a common rotation speed control signal such that the rotation speeds of the two AC motors become target speeds. The control unit inputs the generated common rotation speed control signal to each of the two DC/AC conversion circuits. Here, there may be a case where outputs actually output from the two AC motors do not coincide due to an influence of a minute delay that may occur during rotation speed control processing or a communication delay between the control unit and the DC/AC conversion circuit. In a case where the outputs of the two AC motors do not coincide, since the two AC motors are coupled by the driving force transmission member, the AC motor having a smaller output becomes a load of the AC motor having a larger output. As a result, extra heat generation may occur, and the efficiency of the AC motor may deteriorate.

An object of the present disclosure is to provide an electric vehicle capable of suppressing inconsistency in outputs of a plurality of motors in which rotation speeds of output shafts are interlocked with each other.

### Solution to Problem

An electric vehicle according to an aspect of the present disclosure includes a plurality of motors, a driving force merging unit configured to merge driving forces of the plurality of motors in a state where rotation speeds of output shafts of the plurality of motors are interlocked with each other, a rotation detection unit configured to detect a rotation speed of a target motor that is any one of the plurality of motors, a main control unit configured to generate a rotation speed command signal based on a target rotation speed, and a plurality of command units provided to correspond to the plurality of motors, and configured to transmit motor command signals to the corresponding motors. The main control unit is configured to transmit the rotation speed command signal to a first command unit that is the command unit corresponding to the target motor, and not to transmit the rotation speed command signal to a second command unit that is the command unit corresponding to the motor other than the target motor, and the second command unit is configured to generate a second motor command signal to be transmitted to the motor corresponding to the second command unit based on a processing result of the rotation speed command signal received by the first command unit.

In the electric vehicle according to the aspect of the present disclosure, the rotation speed command signal is transmitted from the main control unit to the first command unit, and the rotation speed command signal is not transmitted from the main control unit to the second command unit. Here, when the rotation speed command signal is separately and independently transmitted from the main control unit to the first command unit and the second command unit, and processing of the rotation speed command signal is separately and independently performed, a calculation error may accumulate until a processing result of the rotation speed command signal is obtained. As compared with such a case, since the second command unit generates the second motor command signal based on the processing result of the rotation speed command signal received by the first command unit, it can be prevented that the outputs of the plurality of motors from not coinciding due to the influence of the calculation error. Therefore, according to the electric vehicle of an aspect of the present disclosure, it is possible to suppress inconsistency in the outputs of the plurality of motors in which the rotation speeds of the output shafts are interlocked with each other.

In one embodiment, the first command unit may be configured to generate a torque command signal based on the received rotation speed command signal, generate a first motor command signal to be transmitted to the target motor based on the generated torque command signal, and transmit the generated torque command signal to the second command unit. The second command unit may be configured to generate the second motor command signal based on the torque command signal received from the first command unit. In this case, the first motor command signal and the second motor command signal can be generated such that the torques output from the plurality of motors are equal to each other.

In one embodiment, the rotation detection unit may be provided in each of the plurality of motors, and the main control unit may be configured to set, in a case where the rotation detection unit of the target motor fails, any one of the plurality of motors in which the failed rotation detection unit is not provided, as a new target motor, and may be configured to transmit the rotation speed command signal to a new first command unit corresponding to the new target motor, and not to transmit the rotation speed command signal to a new second command unit corresponding to the motor other than the new target motor. In this case, even though the rotation detection unit of the motor as the target motor fails, it can be prevented that the outputs of the plurality of motors from not coinciding.

### Advantageous Effects of Invention

According to the present disclosure, it is possible to suppress inconsistency in the outputs of the plurality of motors in which the rotation speeds of the output shafts are interlocked with each other.

### Brief Description of Drawings

FIG. 1 is a schematic configuration diagram illustrating an electric vehicle according to an embodiment.
FIG. 2 is a block diagram showing a functional configuration of each motor driver in FIG. 1.
FIG. 3 is a flowchart illustrating an example of processing of a first motor driver of FIG. 1.
FIG. 4 is a flowchart illustrating an example of processing of a second motor driver of FIG. 1.
FIG. 5 is a schematic configuration diagram illustrating a functional configuration of each motor driver of an electric vehicle according to a comparative example.
FIG. 6 is a diagram illustrating an operation simulation of the electric vehicle of FIG. 5.
FIG. 7 is an enlarged view of a rising portion of FIG. 6.
FIG. 8 is a block diagram illustrating a modification in which a target motor is different from FIG. 2.
FIG. 9 is a block diagram illustrating a modification of the second motor driver of FIG. 2.

### Description of Embodiments

Hereinafter, embodiments of the present disclosure are described in detail with reference to the drawings. Note that, in the following description, the same or equivalent elements are denoted by the same reference signs, and redundant description is omitted.

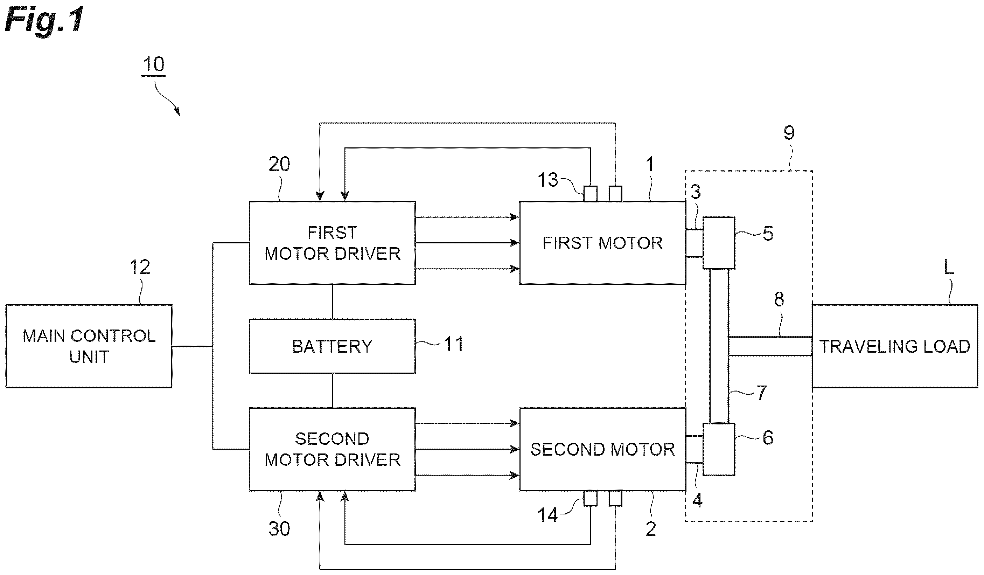

FIG. 1 is a schematic configuration diagram illustrating an electric vehicle according to an embodiment. An electric vehicle 10 is, for example, an industrial vehicle such as a forklift. The electric vehicle 10 includes a first motor 1 and a second motor 2. The first motor 1 and the second motor 2 are, for example, induction motors operating in three-phase AC power. The first motor 1 and the second motor 2 are, for example, the same type of motor.

In the first motor 1 and the second motor 2, rotation speeds of output shafts 3 and 4 are interlocked with each other. Specifically, as illustrated in FIG. 1, a gear 5 attached to the output shaft 3 of the first motor 1 and a gear 6 attached to the output shaft 4 of the second motor 2 are meshed with a common gear 7. The numbers of teeth of the gears 5 and 6 are equal. Driving forces of the first motor 1 and the second motor 2 are merged by the gears 5 and 6 and the gear 7, and are transmitted to a traveling load L (for example, wheels of the electric vehicle 10) via a transmission shaft 8. The output shafts 3 and 4, the gears 5 and 6, the gear 7, and the transmission shaft 8 constitute a driving force merging unit 9. The driving force merging unit 9 merges the driving forces of the first motor 1 and the second motor 2 in a state where the rotation speeds of the output shafts 3 and 4 of the first motor 1 and the second motor 2 are interlocked with each other. The driving force merging unit 9 is, for example, a gear box. As described above, the first motor 1 and the second motor 2 are physically configured to have an equal rotation speed via the gear 7. The first motor 1 and the second motor 2 are in a so-called direct connection state.

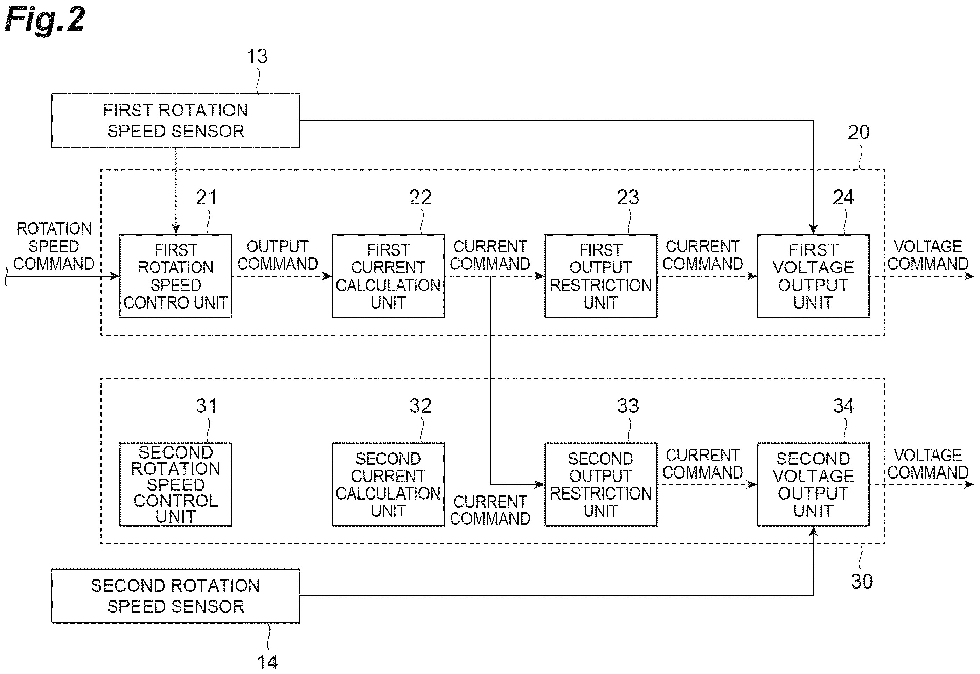

FIG. 2 is a block diagram illustrating a functional configuration of each motor driver in FIG. 1. As illustrated in FIGS. 1 and 2, the electric vehicle 10 includes a battery 11, a main control unit 12, a first rotation speed sensor (rotation detection unit) 13, a second rotation speed sensor (rotation detection unit) 14, a first motor driver (command unit) 20, and a second motor driver (command unit) 30.

The battery 11 is a DC power supply that drives the first motor 1 and the second motor 2. The battery 11 may be, for example, a lead-acid battery or a lithium battery. As an example, the first motor driver 20 and the second motor driver 30 are connected in parallel to output terminals of the battery 11. The first motor 1 and the second motor 2 are connected in parallel to the battery 11.

The main control unit 12 is, for example, a controller including a microcomputer, and integrally controls the electric vehicle 10. The main control unit 12 is an electronic control unit including a central processing unit [CPU], a read only memory [ROM], a random access memory [RAM], a controller area network [CAN] communication circuit, and the like, for example. In the main control unit 12, a program stored in the ROM is loaded into the RAM, and the program loaded into the RAM is executed by the CPU to implement various functions. The main control unit 12 may include a plurality of electronic control units.

The main control unit 12 calculates a target rotation speed. The target rotation speed is a rotation speed of the first motor 1 and the second motor 2 corresponding to a target vehicle speed of the electric vehicle 10. The main control unit 12 calculates the target vehicle speed in accordance with, for example, an operation amount of an accelerator pedal (not illustrated) of the electric vehicle 10.

The main control unit 12 generates a rotation speed command signal based on the target rotation speed. The rotation speed command signal is a command signal to the first motor driver 20 or the second motor driver 30 for performing rotation speed control for bringing the rotation speeds of the first motor 1 and the second motor 2 close to the target rotation speed.

The main control unit 12 transmits the rotation speed command signal to a first command unit that is a command unit corresponding to a target motor. The main control unit 12 does not transmit the rotation speed command signal to a second command unit that is a command unit corresponding to a motor other than the target motor. The target motor is any one of a plurality of motors (here, the first motor 1 and the second motor 2), and is a motor in which the rotation speed control is performed using the rotation speed command signal from the main control unit 12. In the example of FIG. 2, the target motor is the first motor 1. The first command unit that is the command unit corresponding to the target motor is the first motor driver 20. The second command unit that is the command unit corresponding to the motor other than the target motor is the second motor driver 30.

The first rotation speed sensor 13 is attached to the first motor 1. A temperature sensor (not illustrated) may be attached to inverters of the first motor 1 and the first motor driver 20. The first rotation speed sensor 13 of the first motor 1 is connected to the first motor driver 20. The first rotation speed sensor 13 transmits a detection signal to the first motor driver 20. The second rotation speed sensor 14 is attached to the second motor 2. A temperature sensor (not illustrated) may be attached to the inverters of the second motor 2 and the second motor driver 30. The second rotation speed sensor 14 of the second motor 2 is connected to the second motor driver 30. The second rotation speed sensor 14 transmits a detection signal to the second motor driver 30. For example, known sensors such as an optical encoder and a rotation speed meter using a magnetic sensor can be used as the first rotation speed sensor 13 and the second rotation speed sensor 14.

Each of the first motor driver 20 and the second motor driver 30 includes, for example, a controller including a microcomputer, and an inverter that drives each of the first motor 1 and the second motor 2. A power supply terminal of the first motor 1 is connected to an output terminal of the first motor driver 20 (for example, U, V, and W terminals). The first motor driver 20 is provided to correspond to the first motor 1. The first motor driver 20 transmits a motor command signal to the first motor 1. A power supply terminal of the second motor 2 is connected to an output terminal of the second motor driver 30. The second motor driver 30 is provided to correspond to the second motor 2. The second motor driver 30 transmits a motor command signal to the second motor 2. That is, the first motor driver 20 and the second motor driver 30 are a plurality of command units that transmit the motor command signals to the corresponding first motor 1 and second motor 2.

In the present embodiment, the rotation speed control for bringing the detected rotation speed close to the target rotation speed is executed by using the rotation speed of one of the first motor 1 and the second motor 2. In the example of FIG. 2, the rotation speed of one of the first motor 1 and the second motor 2 is the rotation speed of the first motor 1 detected by the first rotation speed sensor 13. In the example of FIG. 2, the first motor 1 is the target motor. In the example of FIG. 2, the first rotation speed sensor 13 functions as the rotation detection unit that detects the rotation speed of the target motor. In the example of FIG. 2, the rotation speed control is performed for the first motor 1. In the example of FIG. 2, for the second motor 2, torque control for setting an output torque to be equal to an output torque of the first motor 1 is combined (details will be described later).

The first motor driver 20 includes, as functional configurations, a first rotation speed control unit 21, a first current calculation unit 22, a first output restriction unit 23, and a first voltage output unit 24. The second motor driver 30 includes, as functional configurations, a second rotation speed control unit 31, a second current calculation unit 32, a second output restriction unit 33, and a second voltage output unit 34.

For example, the first rotation speed control unit 21 receives the rotation speed command from the main control unit 12 through the CAN communication circuit. The first rotation speed control unit 21 acquires the first rotation speed based on a detection result of the first rotation speed sensor 13.

The first rotation speed control unit 21 generates a torque command signal based on the received rotation speed command signal. The torque command signal mentioned herein means an output command generated by the rotation speed control. The output command is calculated as a torque value. The first rotation speed control unit 21 performs the rotation speed control for bringing the first rotation speed of the first motor 1 (the target motor here) detected by the first rotation speed sensor 13 close to the target rotation speed. For example, the first rotation speed control unit 21 calculates an output command corresponding to an output in response to a deviation between the first rotation speed and the target rotation speed. Note that, in the example of FIG. 2, the rotation speed command is not transmitted from the main control unit 12 to the second motor driver 30. Thus, the second rotation speed control unit 31 has a function similar to the first rotation speed control unit 21, but does not calculate the output command.

The first current calculation unit 22 calculates a current command based on the torque command signal generated by the first rotation speed control unit 21. For example, the first current calculation unit 22 calculates the current command to cause the first motor 1 to output a torque corresponding to the output command. The first current calculation unit 22 converts the torque value corresponding to the output command calculated by the first rotation speed control unit 21 into a current value and calculates the current command. Note that, in the example of FIG. 2, in the second motor driver 30, the second rotation speed control unit 31 does not generate the output command. The second current calculation unit 32 has a function similar to the first current calculation unit 22, but does not calculate the current command.

The first output restriction unit 23 may execute first output restriction for protecting the first motor 1 based on a detection result of the temperature sensor of the first motor 1. For example, in a case where the first motor 1 or the inverter is in an overheat state, the first output restriction unit 23 outputs a current command restricted by a predetermined restricted current value, as the first output restriction. For example, in a case where the first motor 1 is not in the overheat state, the first output restriction unit 23 outputs the current command as it is without restricting the current command.

The first voltage output unit 24 generates a first motor command signal to be transmitted to the first motor 1 (the target motor mentioned herein). The first motor command signal is a command signal of a first voltage for powering the first motor 1. The first voltage output unit 24 calculates, as the first motor command signal, a first voltage having a predetermined phase as a sine wave of a three-phase AC by, for example, turning on or off a plurality of MOSFETs of the inverter based on, for example, the current command from the first output restriction unit 23 and the first rotation speed. The first voltage output unit 24 outputs the calculated first voltage to the first motor 1.

Here, the first motor driver 20 transmits the generated torque command signal to the second motor driver 30. The generated torque command signal means a processing result of the rotation speed control of the first rotation speed control unit 21. The torque command signal transmitted to the second motor driver 30 may be a command signal on a downstream side of a processing flow of the first rotation speed control unit 21. In the example of FIG. 2, the first motor driver 20 transmits the current command calculated by the first current calculation unit 22 to the second motor driver 30. As an example, the torque command signal transmitted to the second motor driver 30 is a current command calculated by the first current calculation unit 22.

The second output restriction unit 33 may execute second output restriction for protecting the second motor 2 based on a detection result of the temperature sensor of the second motor 2. For example, in a case where the second motor 2 or the inverter is in the overheat state, the second output restriction unit 33 outputs a current command restricted by a predetermined restricted current value, as the second output restriction. For example, in a case where the second motor 2 is not in the overheat state, the second output restriction unit 33 outputs the current command as it is without restricting the current command.

The second motor driver 30 generates a second motor command signal to be transmitted to the second motor 2 corresponding to the second motor driver 30 based on a processing result of the rotation speed command signal transmitted from the main control unit 12 and received by the first motor driver 20. The second motor driver 30 generates the second motor command signal based on the torque command signal received from the first motor driver 20. The second motor command signal is a command signal of a second voltage for powering the second motor 2. The second voltage output unit 34 calculates a second voltage having a predetermined phase as a sine wave of a three-phase AC by, for example, turning on or off a plurality of MOSFETs of the inverter based on, for example, the current command from the second output restriction unit 33 and the second rotation speed, as the second motor command signal. The second voltage output unit 34 outputs the calculated second voltage to the second motor 2. Note that, the second voltage output unit 34 may acquire the second rotation speed based on the detection result of the second rotation speed sensor 14.

With the above configuration, torque control for setting an output torque to be equal to an output torque of the first motor 1 is combined for the second motor 2. As a result, the outputs of the first motor 1 and the second motor 2 coincide with each other, and it is prevented that the outputs of the first motor 1 and the second motor 2 do not coincide due to the influence of a calculation error.

### [Example of Processing by Motor Driver]

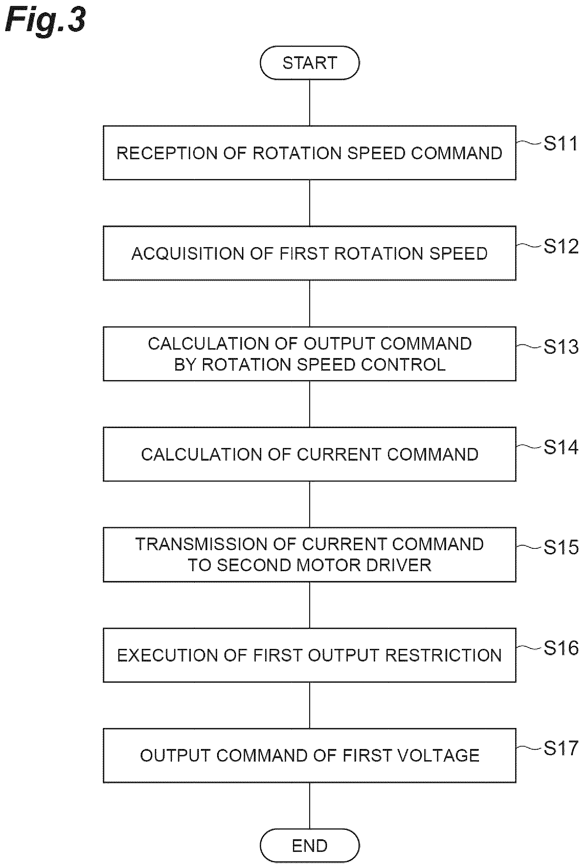

Next, an example of processing of each motor driver will be described. FIG. 3 is a flowchart illustrating an example of processing of the first motor driver of FIG. 1. The processing illustrated in FIG. 3 is repeatedly executed at each predetermined calculation cycle, for example, during the driving of the electric vehicle 10.

As illustrated in FIG. 3, the first motor driver 20 receives the rotation speed command by the first rotation speed control unit 21 in S 11. For example, the first rotation speed control unit 21 receives the rotation speed command transmitted from main control unit 12 through the CAN communication circuit. Here, in the second motor driver 30, the rotation speed command is not transmitted from the main control unit 12.

In S12, the first motor driver 20 acquires the first rotation speed by the first rotation speed control unit 21. The first rotation speed control unit 21 acquires the first rotation speed based on a detection result of the first rotation speed sensor 13. Here, in the second motor driver 30, the first rotation speed and the second rotation speed are not acquired by the second rotation speed control unit 31.

In S13, the first motor driver 20 calculates the output command using the rotation speed control by the first rotation speed control unit 21. For example, the first rotation speed control unit 21 calculates the output command corresponding to the output in response to the deviation between the first rotation speed and the target rotation speed to perform the rotation speed control for bringing the first rotation speed of the first motor 1 (the target motor mentioned here) detected by the first rotation speed sensor 13 close to the target rotation speed.

In S14, the first motor driver 20 calculates the current command by the first current calculation unit 22. For example, the first current calculation unit 22 calculates the current command of the current value corresponding to the output command calculated by the first rotation speed control unit 21, so as to cause the first motor 1 to output the torque corresponding to the output command.

In S15, the first motor driver 20 transmits the current command to the second motor driver 30. For example, the first motor driver 20 transmits a latest current command calculated currently by the first current calculation unit 22 in the processing of FIG. 3 to the second motor driver 30.

In S 16, the first motor driver 20 executes the first output restriction by the first output restriction unit 23. For example, based on the detection result of the temperature sensor of the first motor 1, the first output restriction unit 23 outputs the current command restricted by the predetermined restricted current value as the first output restriction in a case where the first motor 1 or the inverter is in the overheat state, and outputs the current command as it is without restricting the current command in a case where the first motor 1 is not in the overheat state.

In S17, the first motor driver 20 commands the first voltage output unit 24 to output the first voltage. The first voltage output unit 24 calculates the first voltage having the predetermined phase as the sine wave of the three-phase AC based on, for example, the current command from the first output restriction unit 23 and the first rotation speed. The first voltage output unit 24 outputs the calculated first voltage to the first motor 1. Thereafter, the first motor driver 20 ends the processing of FIG. 3.

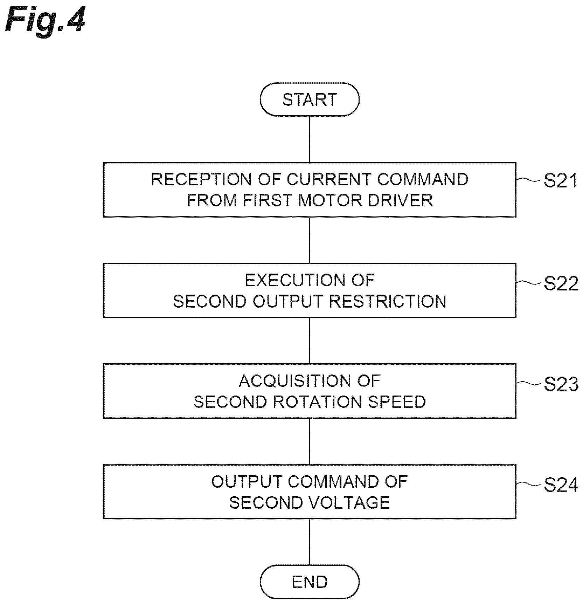

FIG. 4 is a flowchart illustrating an example of processing of the second motor driver of FIG. 1. The processing illustrated in FIG. 4 is repeatedly executed at each predetermined calculation cycle, for example, during the driving of the electric vehicle 10.

As illustrated in FIG. 4, the second motor driver 30 receives the current command from the first motor driver 20 in S21. For example, the second motor driver 30 receives the latest current command calculated by the first current calculation unit 22 of the first motor driver 20 in the processing of FIG. 3 in this instance from the first motor driver 20.

In S22, the second motor driver 30 executes the second output restriction by the second output restriction unit 33. For example, based on the detection result of the temperature sensor of the second motor 2, the second output restriction unit 33 outputs the current command restricted by the predetermined restricted current value as the second output restriction in a case where the second motor 2 or the inverter is in the overheat state, and outputs the current command as it is without restricting the current command in a case where the second motor 2 is not in the overheat state.

In S23, the second motor driver 30 acquires the second rotation speed by the second voltage output unit 34. For example, the second voltage output unit 34 acquires the second rotation speed based on the detection result of the second rotation speed sensor 14.

In S24, the second motor driver 30 commands the second voltage output unit 34 to output the second voltage. The second voltage output unit 34 calculates the second voltage having the predetermined phase as the sine wave of the three-phase AC based on, for example, the current command from the second output restriction unit 33 and the second rotation speed. The second voltage output unit 34 outputs the calculated second voltage to the second motor 2. Thereafter, the second motor driver 30 ends the processing of FIG. 4.

### [Operations and Effects of Electric Vehicle 10]

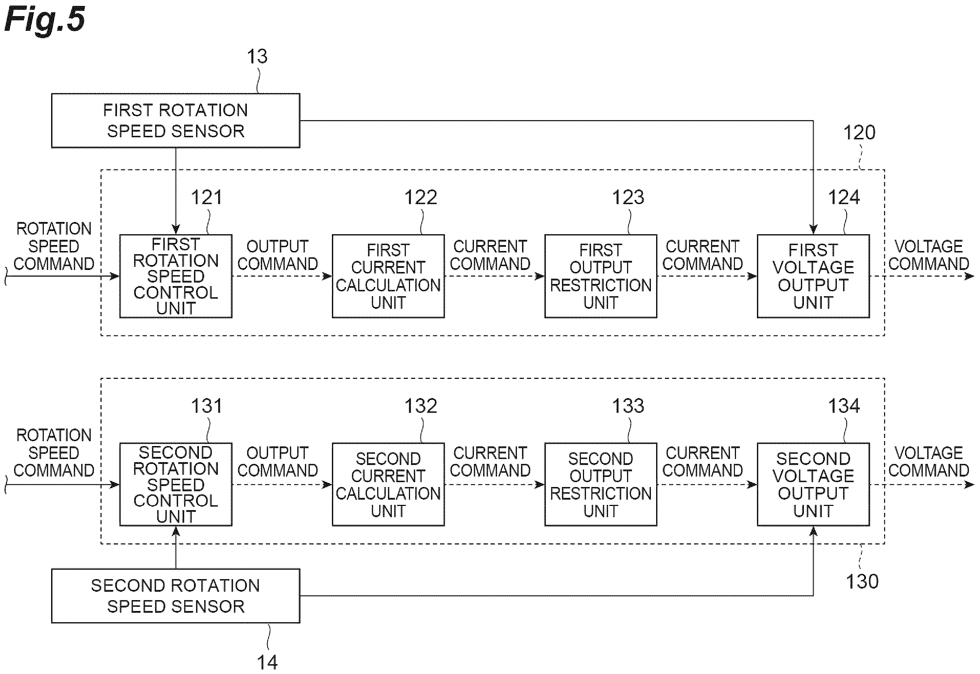

FIG. 5 is a schematic configuration diagram illustrating a functional configuration of each motor driver of an electric vehicle according to a comparative example. As illustrated in FIG. 5, in the electric vehicle according to the comparative example, rotation speed command signals are separately and independently transmitted from the main control unit 12 to a first motor driver 120 and a second motor driver 130. The first motor driver 120 has basically a configuration similar to the first motor driver 20. However, the first motor driver 120 is different from the first motor driver 20 in that the command signal output in the first motor driver 120 is not transmitted to the second motor driver 130. The command signal output in the first motor driver 120 means a command signal output from any of a first rotation speed control unit 121, a first current calculation unit 122, a first output restriction unit 123, and a first voltage output unit 124. The second motor driver 130 has basically a configuration similar to the second motor driver 30. However, the second motor driver 130 is different from the second motor driver 30 in that a second rotation speed control unit 131 receives a rotation speed command from the main control unit 12 via the CAN communication circuit and generates a torque command signal.

The first motor driver 120 and the second motor driver 130 independently process the rotation speed command signals. In such a configuration, a calculation error may be accumulated before an output command that is a processing result of the rotation speed command signals is obtained.

The calculation error can be caused by a minute delay that can occur during rotation speed control processing using the rotation speed command received by each motor driver. The minute delay includes, for example, a delay of a reception timing due to variation in a CAN communication cycle from the main control unit 12. The calculation error can be caused by a minute difference in the rotation speed recognized by each motor driver. The minute difference in the rotation speed recognized by each motor driver includes, for example, a difference in the rotation speed itself due to variation in each rotation speed sensor itself. The minute difference in the rotation speed recognized by each motor driver includes a difference in a recognition rotation speed caused by variation in an integration cycle when a pulse signal from each rotation speed sensor is counted up due to calculation cycle variation or the like. Since such an internal calculation error is also one factor, even though the first rotation speed of the first rotation speed sensor 13 is input to the first rotation speed control unit 21 and the second rotation speed control unit 31, the calculation error may occur. As a result, an output actually output from the first motor 1 and an output actually output from the second motor 2 may not coincide due to the influence of the accumulation of the calculation error.

In a case where the output actually output from the first motor 1 and the output actually output from the second motor 2 do not coincide, extra heat generation may occur in the first motor 1 and the second motor 2. Thus, the efficiency of the motor for the first motor 1 and the second motor 2 may deteriorate. For example, the first motor driver 120 calculates the output command such that the first rotation speed becomes the target rotation speed by the first rotation speed control unit 121 while receiving the inconsistency in the output of the second motor 2 with respect to the first motor 1 as disturbance. The second motor driver 130 calculates the output command such that the second rotation speed becomes the target rotation speed by the second rotation speed control unit 131 while receiving the inconsistency in the output of the first motor 1 with respect to the second motor 2 as disturbance. That is, in the electric vehicle according to the comparative example, the rotation speed control is not configured to feed back the inconsistency itself in the outputs of the first motor 1 and the second motor 2. Therefore, the rotation speed control may be performed while maintaining the inconsistency in the outputs instead of reducing the inconsistency in the outputs itself between the first motor 1 and the second motor 2.

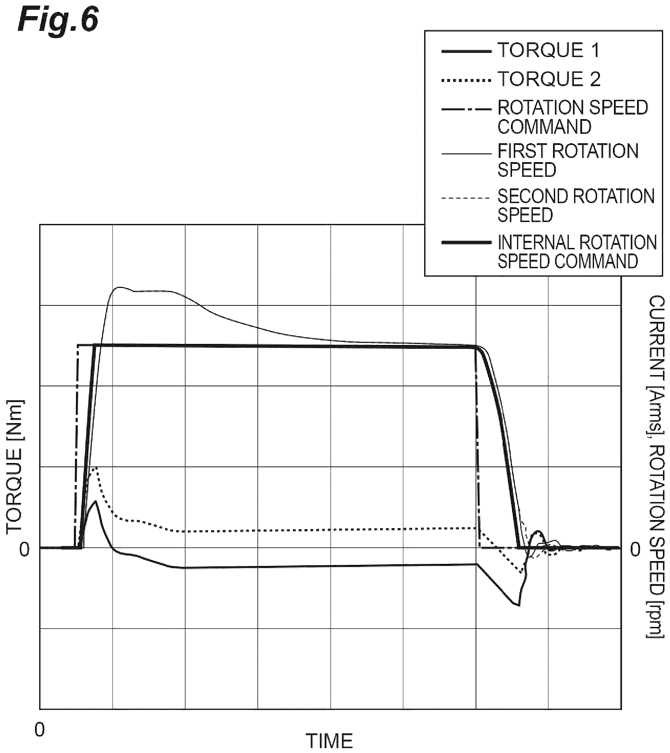

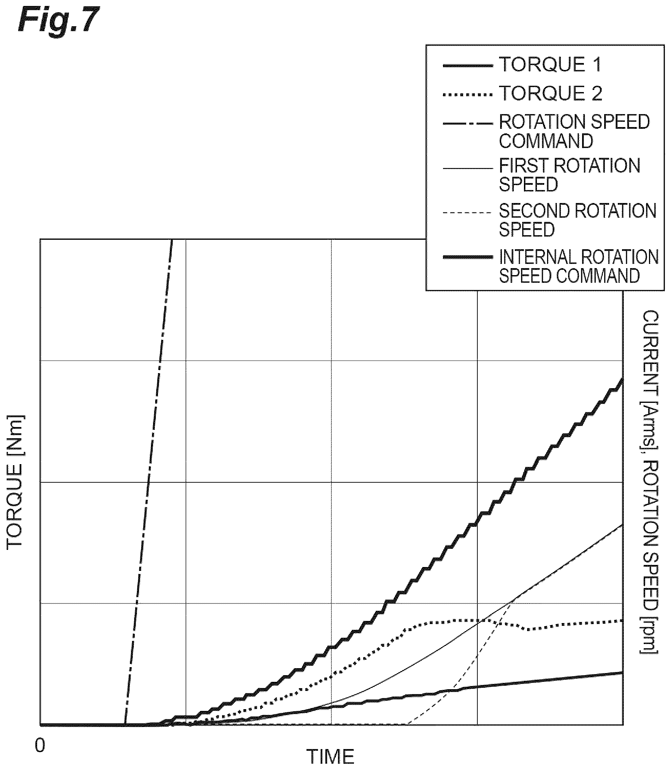

Specifically, FIG. 6 is a diagram illustrating an operation simulation of the electric vehicle of FIG. 5. FIG. 7 is an enlarged view of a rising portion of FIG. 6. In FIGS. 6 and 7, a horizontal axis represents time, and a vertical axis represents torque, current, and rotation speed. In FIGS. 6 and 7, the "rotation speed command" is the rotation speed command from the main control unit 12. An "internal rotation speed command" is a target rotation speed when processing is performed by the rotation speed control of each motor driver. For example, the internal rotation speed command may be obtained by performing predetermined filter processing or the like on the rotation speed command received from the main control unit 12. The "first rotation speed" is the rotation speed of the first motor 1 based on the detection result of the first rotation speed sensor 13. The "second rotation speed" is the rotation speed of the second motor 2 based on the detection result of the second rotation speed sensor 14. "Torque 1" is the output torque of the first motor 1. "Torque 2" is the output torque of the second motor 2.

FIGS. 6 and 7 illustrate simulation results of the outputs of the first motor 1 and the second motor 2 when the rotation speed command indicated by a dashed dotted line is increased stepwise from 0 and is decreased stepwise to 0 after a predetermined time has elapsed. In order to simulate the accumulation of the calculation error as described above, in this simulation, as illustrated in FIG. 7, a delay for a certain time from the first rotation speed is intentionally added to the second rotation speed immediately after the rotation speed command is increased from 0 stepwise. The delay for the certain period of time corresponds to a portion where the first rotation speed increases following the internal rotation speed command, whereas an apparent second rotation speed on a graph does not follow the internal rotation speed command and coincides with the horizontal axis of FIG. 7. During a period of the delay for the certain period of time, the apparent second rotation speed on the graph does not follow. However, since the rotation speeds of the output shafts of the first motor 1 and the second motor 2 are interlocked with each other, a physical rotation speed of the second motor 2 is interlocked to coincide with the rotation speed of the first motor 1 even during the period of the delay for the certain period of time.

The first rotation speed without such a delay for the certain period of time increases following the internal rotation speed command. The second rotation speed having the delay for the certain period of time does not follow the internal rotation speed command in the delay portion as compared with the first rotation speed. Thus, Torque 2 increases to significantly rise as compared with Torque 1 in accordance with a difference between the internal rotation speed command and the second rotation speed. Here, since the rotation speeds of the output shafts of the first motor 1 and the second motor 2 are interlocked with each other, the output shaft of the first motor 1 is twisted by Torque 2 of the second motor 2. Torque 1 is reduced to resist such Torque 2 as a disturbance. As a result, the torque increases more slowly than Torque 2. However, the inconsistency itself in the outputs of the first motor 1 and the second motor 2 is not reduced. Thus, the inconsistency in Torque 1 and Torque 2 is maintained as this magnitude relationship and reaches the state of FIG. 6.

As a result, as illustrated in FIG. 6, Torque 1 and Torque 2 do not coincide with each other in a portion where the first rotation speed and the second rotation speed converge to the rotation speed command after the rotation speed command is increased stepwise from 0, thereby Torque 1 and Torque 2 are substantially line-symmetric with respect to the horizontal axis (torque = 0). In this state, not only a load required to rotate in a state where the first rotation speed and the second rotation speed are interlocked with each other, but also an inconsistency amount between Torque 1 and Torque 2 is added to the load as a disturbance torque. That is, in the first motor 1 and the second motor 2, extra heat generation occurs due to the disturbance torque corresponding to the inconsistency in Torque 1 and Torque 2, and it can be said that the efficiency of the motors deteriorates. Note that, assuming an ideal state where Torque 1 and Torque 2 have the same sign and Torque 1 and Torque 2 coincide, such an additional disturbance torque does not occur. Torque 1 and torque 2 in the ideal state do not mutually cancel each other out as the disturbance torques. The sum of Torque 1 and Torque 2 in the ideal state is balanced with the load required to rotate the first rotation speed and the second rotation speed in a state where the first rotation speed and the second rotation speed are interlocked with each other. However, since there may be the accumulation of the calculation error as described above, such an ideal state is not necessarily realized.

In contrast to such a comparative example, in the electric vehicle 10, the rotation speed command signal is transmitted from the main control unit 12 to the first motor driver 20, but the rotation speed command signal is not transmitted from the main control unit 12 to the second motor driver 30. The second motor driver 30 generates the second motor command signal based on the processing result of the rotation speed command signal received by the first motor driver 20. As a result, it can be prevented that the outputs of the first motor 1 and the second motor 2 from not coinciding due to the influence of the calculation error. Therefore, according to the electric vehicle 10, it is possible to suppress inconsistency in the outputs of the first motor 1 and the second motor 2 in which the first rotation speed and the second rotation speed, which are the rotation speeds of the output shafts 3 and 4, are interlocked with each other.

In the electric vehicle 10, the first motor driver 20 generates the torque command signal by the first rotation speed control unit 21 based on the rotation speed command signal received from the main control unit 12. The first motor driver 20 generates the first motor command signal by the first voltage output unit 24 to be transmitted to the first motor 1 that is the target motor, based on the torque command signal generated by the first rotation speed control unit 21. The first motor driver 20 transmits the torque command signal generated by the first rotation speed control unit 21 to the second motor driver 30. The second motor driver 30 generates the second motor command signal by the second voltage output unit 34 based on the torque command signal received from the first motor driver 20. As a result, the first motor command signal and the second motor command signal can be generated such that the torques output from the first motor 1 and the second motor 2 are equal to each other.

### [Modification]

Although the embodiment of the present disclosure has been described above, the present disclosure is not limited to the above-described embodiment. The present disclosure can be implemented in various forms with various modifications and improvements based on knowledge of those skilled in the art, including the above-described embodiment.

In the above embodiment, as illustrated in FIG. 2, the first motor 1 is the target motor, but the present disclosure is not limited to this example. The present disclosure is not limited to the example in which the first rotation speed sensor 13 functions as the rotation detection unit that detects the rotation speed of the target motor. The present disclosure is not limited to the example in which the rotation speed control is performed for the first motor 1 and the torque control for setting the output torque to be equal to the output torque of the first motor 1 is combined for the second motor 2. For example, in a case where the first motor driver 20 and the second motor driver 30 have similar functional configurations as illustrated in FIG. 2, the first motor driver 20 and the second motor driver 30 may be swapped from the example of FIG. 2.

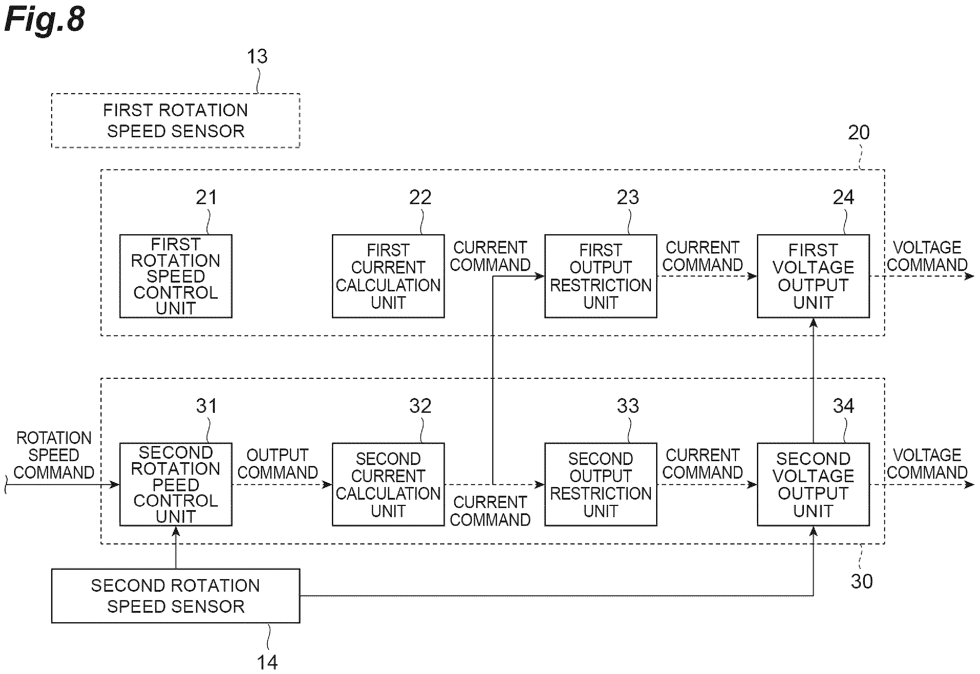

FIG. 8 is a block diagram illustrating a modification in which the target motor is different from the target motor in FIG. 2. As illustrated in FIG. 8, the second motor 2 may be the target motor. The second rotation speed sensor 14 may function as the rotation detection unit that detects the rotation speed of the target motor. The rotation speed control may be performed for the second motor 2, and the torque control for setting the output torque to be equal to the output torque of the second motor 2 may be combined for the first motor 1. In this case, the first command unit that is the command unit corresponding to the target motor is the second motor driver 30. The second command unit that is the command unit corresponding to the motor other than the target motor is the first motor driver 20. When the output command of the first voltage is performed by the first voltage output unit 24, the first voltage output unit 24 may acquire the detection result of the second rotation speed sensor 14 instead of the detection result of the first rotation speed sensor 13.

In the example of FIG. 8, when the target motor is the first motor 1 and the first rotation speed sensor 13 fails during the operation in the state of the example of FIG. 2, an aspect may be switched to fail safe. In a case where the first rotation speed sensor 13 of the first motor 1 that is the target motor fails, the main control unit 12 may set, as a new target motor, the second motor 2 in which the failed first rotation speed sensor 13 is not provided. The second motor 2 in which the failed first rotation speed sensor 13 is not provided corresponds to "any one of the plurality of motors in which the failed rotation speed detection unit is not provided". In this case, the main control unit 12 transmits the rotation speed command signal to the second motor driver 30. The second motor driver 30 mentioned herein is a new first command unit corresponding to the second motor 2 that is the new target motor. The main control unit 12 does not transmit the rotation speed command signal to the first motor driver 20. Here, the first motor driver 20 is a new second command unit corresponding to the first motor 1 that is the motor other than the new target motor. As a result, even though the first rotation speed sensor 13 of the first motor 1 as the target motor fails, it can be prevented that the outputs of the first motor 1 and the second motor 2 from not coinciding.

In the above embodiment, as illustrated in FIG. 2, the torque command signal transmitted from the first motor driver 20 to the second motor driver 30 is the current command between the first current calculation unit 22 and the first output restriction unit 23, but the present disclosure is not limited to this example. The torque command signal transmitted from the first motor driver 20 to the second motor driver 30 may be the output command between the first rotation speed control unit 21 and the first current calculation unit 22. The torque command signal transmitted from the first motor driver 20 to the second motor driver 30 may be the current command between the first output restriction unit 23 and the first voltage output unit 24. The torque command signal transmitted from the first motor driver 20 to the second motor driver 30 may be the voltage command output from the first voltage output unit 24.

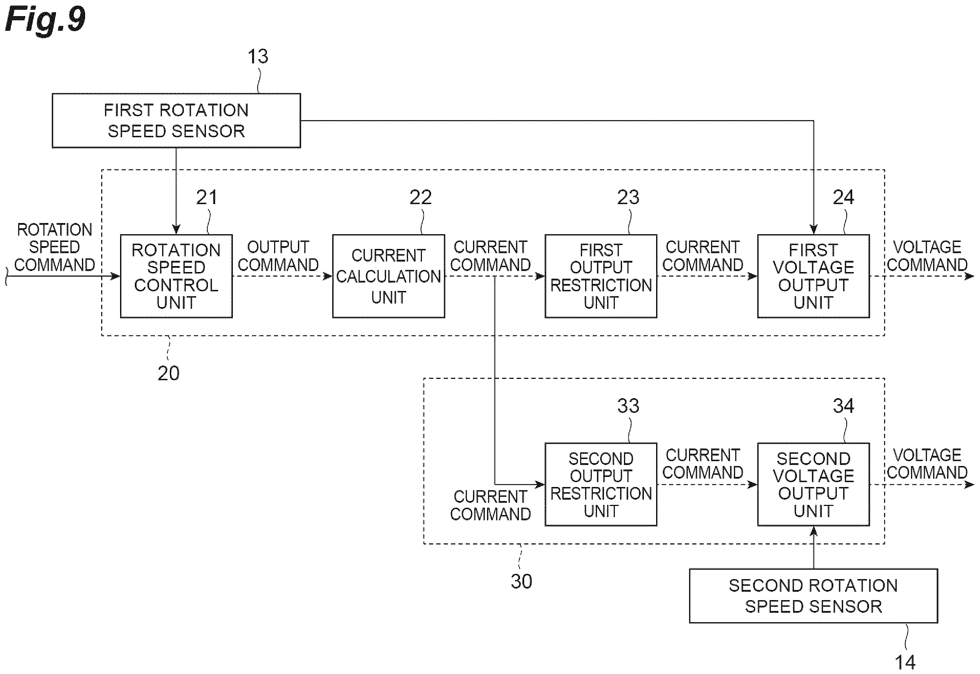

In the above embodiment, as illustrated in FIG. 2, the first motor driver 20 and the second motor driver 30 have similar functional configurations, but the present disclosure is not limited to this example. A part of the functional configurations of the second motor driver 30 corresponding to the second motor 2 that is the motor other than the target motor may be omitted. For example, FIG. 9 is a block diagram illustrating a modification of the second motor driver of FIG. 2. As illustrated in FIG. 9, for example, the second rotation speed control unit 31 and the second current calculation unit 32 may be omitted. Note that, the functional configuration to be omitted may be determined in accordance with the torque command signal transmitted from the first motor driver 20 to the second motor driver 30. For example, in a case where the first motor driver 20 transmits, as the torque command signal, the output command between the first rotation speed control unit 21 and the first current calculation unit 22 to the second motor driver 30, the second current calculation unit 32 is required to calculate the current command, and thus, only the second rotation speed control unit 31 may be omitted.

In the above embodiment, the second voltage output unit 34 calculates the second motor command signal (second voltage) based on the second rotation speed, but the present disclosure is not limited to this example. When the first motor 1 and the second motor 2 are the induction motors, the second voltage may be calculated based on the first rotation speed. Note that, in a case where the first motor 1 and the second motor 2 are permanent magnet motors, the second voltage output unit 34 may calculate the second voltage based on the second rotation speed.

In the above embodiment, in the electric vehicle 10, the first rotation speed sensor 13 and the second rotation speed sensor 14 are provided in the first motor 1 and the second motor 2, respectively, but the present disclosure is not limited to this example. For example, in a case where the target motor is fixed to the first motor 1, the second rotation speed sensor 14 may be omitted, and only the detection result of the first rotation speed sensor 13 may be used.

In the above embodiment, the first motor driver 20 includes the first output restriction unit 23, but the first output restriction unit 23 is not required. The second motor driver 30 includes the second output restriction unit 33, but the second output restriction unit 33 is not required.

In the above embodiment, the output shafts 3 and 4, the gears 5 and 6, the gear 7, and the transmission shaft 8 constitute the driving force merging unit 9, but the present disclosure is not limited to this configuration example. The driving force merging unit 9 can use another known driving force transmission mechanism as long as the driving force merging unit 9 merges the driving forces of the first motor 1 and the second motor 2 in a state where the rotation speeds of the output shafts 3 and 4 of the first motor 1 and the second motor 2 are interlocked with each other. For example, the rotation speeds of the output shafts 3 and 4 of the first motor 1 and the second motor 2 may be interlocked with each other via a planetary gear. The configuration of the gear may be multistage. A rotational force may be transmitted by a belt or the like.

In the above embodiment, the electric vehicle 10 is the industrial vehicle such as the forklift, but is not limited to this example. Any other vehicle may be used as long as the vehicle drives a motor using the battery 11 as a power supply. The first motor 1 and the second motor 2 are three-phase AC motors, but are not limited to this example. In short, the output command as the processing result of the rotation speed control is the same and the plurality of motors are controlled in a torque control manner. The first motor 1 and the second motor 2 may be two-phase AC motors. The first motor 1 and the second motor 2 may be DC motors.

### Reference Signs List

1 first motor (target motor)
2 second motor (new target motor)
3, 4 output shaft
9 driving force merging unit
10 electric vehicle
12 main control unit
13 first rotation speed sensor (rotation detection unit)
14 second rotation speed sensor (rotation detection unit)
20 first motor driver (command unit, first command unit, new second command unit)
30 second motor driver (command unit, second command unit, new first command unit)

## Claims

1. An electric vehicle comprising:
a plurality of motors;
a driving force merging unit configured to merge driving forces of the plurality of motors in a state where rotation speeds of output shafts of the plurality of motors are interlocked with each other;
a rotation detection unit configured to detect a rotation speed of a target motor that is any one of the plurality of motors;
a main control unit configured to generate a rotation speed command signal based on a target rotation speed; and
a plurality of command units provided to correspond to the plurality of motors, and configured to transmit motor command signals to the corresponding motors,
wherein the main control unit is configured to transmit the rotation speed command signal to a first command unit that is the command unit corresponding to the target motor, and not to transmit the rotation speed command signal to a second command unit that is the command unit corresponding to the motor other than the target motor, and
the second command unit is configured to generate a second motor command signal to be transmitted to the motor corresponding to the second command unit based on a processing result of the rotation speed command signal received by the first command unit.

2. The electric vehicle according to claim 1,
wherein the first command unit is configured to
generate a torque command signal based on the received rotation speed command signal,
generate a first motor command signal to be transmitted to the target motor based on the generated torque command signal, and
transmit the generated torque command signal to the second command unit, and
the second command unit is configured to
generate the second motor command signal based on the torque command signal received from the first command unit.

3. The electric vehicle according to claim 1 or 2,
wherein the rotation detection unit is provided in each of the plurality of motors, and
the main control unit is configured to
set, in a case where the rotation detection unit of the target motor fails, any one of the plurality of motors in which the failed rotation detection unit is not provided, as a new target motor, and
transmit the rotation speed command signal to a new first command unit corresponding to the new target motor, and not to transmit the rotation speed command signal to a new second command unit corresponding to the motor other than the new target motor.
